# EUROPEAN PATENT APPLICATION

(11) **EP 2 939 562 A1**
(43) Date of publication of application: **04.11.2015**
(21) Application number: 15161882.4
(22) Date of filing: 31.03.2015
(51) Int. Cl.: A45F 5/10, A63B 21/00

(54) **A HANDLE**

(30) Priority: 28.04.2014 GB 201407452
(71) Applicant: Daniels, James, Reading, Berkshire RG7 1JH (GB)
(72) Inventor: Daniels, James, Reading, Berkshire RG7 1JH (GB)
(74) Representative: Beattie, Alex Thomas Stewart

(57) **Abstract**

A handle (3), comprising: an elongate grip (4) that, in use, is grasped by a user; a mounting portion (7) which is fixed to the grip (4) and extends over the grip (4) so that the grip (4) and mounting portion (7) define a space (8) therebetween in which the fingers or palm of a user may be accommodated; and two or more attachment arrangements (13), each of which is attached to the mounting portion (7) and presents an attachment site which projects outwardly from the mounting portion (7).

## Description

This invention relates to a handle, and in particular to a versatile handle for lifting, carrying, exercising and other applications.

Various different types of handle for lifting and carrying loads are known.

It is an object of the present invention to seek to provide an improved handle of this type.

Accordingly, one aspect of the present invention provides a handle, comprising: an elongate grip that, in use, is grasped by a user; a mounting portion which is fixed to the grip and extends over the grip so that the grip and mounting portion define a space therebetween in which the fingers or palm of a user may be accommodated; and two or more attachment arrangements, each of which is attached to the mounting portion and presents an attachment site which projects outwardly from the mounting portion.

Advantageously, the mounting portion extends from a point at or near the first end of the grip to a point at or near the second end of the grip.

Preferably, each attachment arrangement may move along a length of the mounting portion within a defined range of motion.

Conveniently, each of the attachment arrangements may move along the length of the mounting portion within a common range of motion.

Advantageously, each of the attachment arrangements may move along the length of the mounting portion within separate and non-overlapping ranges of motion.

Preferably, one or more channels is defined within the mounting portion, and each of the attachment arrangements comprises an engagement portion which is received within, and may move along, the or a channel.

Conveniently, the engagement portion comprises one or more rollers that may roll within the or a channel.

Advantageously, a single channel is defined within the mounting portion, and each of the attachment arrangements may move within the channel.

Preferably, a plurality of channels are defined within the mounting portion, and each of the attachment arrangements may move within a respective one of the channels.

Conveniently, each of the attachment arrangements is fixed in place with respect to the mounting portion.

Advantageously, a part of each of the attachment arrangements is received within a respective recess in the mounting portion.

Preferably, the part of the attachment arrangement that is received within the recess is substantially the same shape as the recess.

Conveniently, one of the attachment arrangements protrudes from the mounting arrangement in a direction which is substantially parallel with the longitudinal axis of the grip portion.

Advantageously, one of the attachment arrangements protrudes from the mounting arrangement in a direction which is substantially perpendicular to the longitudinal axis of the grip portion.

Preferably, at least one of the attachment sites comprises a closed or substantially closed loop.

Another aspect of the invention provides a method of making a handle, comprising the steps of: providing two handle halves, each handle half having an elongate grip that, in use, is grasped by a user, and a mounting portion which is fixed to the grip and extends over the grip so that the grip and mounting portion define a space therebetween in which the fingers or palm of a user may be accommodated; forming a channel or two or more recessed portions on an inner surface of the mounting portion of at least one of the handle halves; providing two or more attachment arrangements, each comprising a body having a first end and an attachment site at or near a second end thereof; and fixing the two handle halves together so that the first end of each attachment arrangement is received within the channel or within one of the recessed portions, and the attachment site of each attachment arrangement protrudes outwardly from the mounting portion.

Conveniently: a channel is formed on an inner surface of the mounting portion of at least one of the handle halves; each attachment arrangements comprises a body having one or more rollers at or near the first end thereof; and the two handle halves are fixed together so that the rollers of the attachment arrangements are received within the channel, allowing the attachment arrangement to move along the length of the channel.

Advantageously, the step of forming a channel comprises forming a channel having an inner wall and an outer wall, and wherein the height of the outer wall is less than that of the inner wall, to create a gap in the outer surface of the mounting portion of the assembled handle through which the body of each attachment arrangement may pass.

Preferably: two or more recessed regions are formed on the inner surfaces of the mounting portions of the handle halves; and the two handle halves are fixed together so that the first ends of the attachment arrangements are received in respective ones of the recessed regions.

In order that the present invention may be more readily understood embodiments thereof will now be described, by way of example, with reference to the accompanying drawings, in which:
Figures 1 and 2 show halves of a first handle embodying the present invention;
Figure 3 shows two halves as shown in figures and 2 attached together;
Figure 4 shows an attachment arrangement suitable for use with the present invention;
Figures 5 and 6 show the first handle assembled;
Figures 7 and 8 show the first handle in use;
Figures 9 and 10 show parts of alternative handles embodying the present invention;
Figure 11 shows a half of a further handle embodying the present invention;
Figure 12 shows an attachment arrangement suitable for use with the further handle; and
Figure 13 shows the further handle assembled.

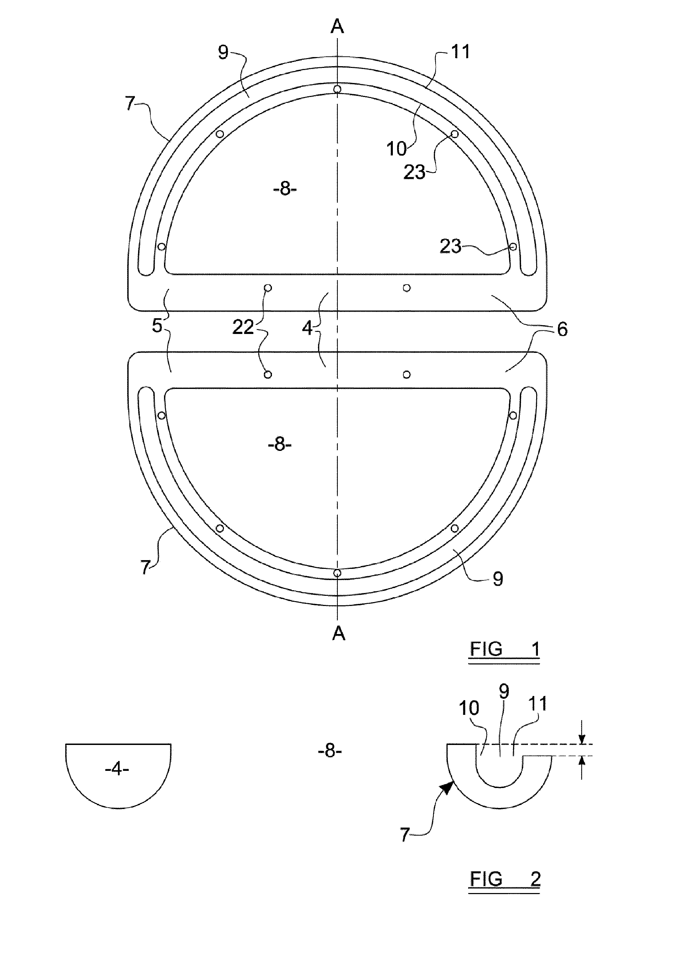

Referring firstly to figure 1, two halves 1,2 of a first handle 3 embodying the present invention are shown.

Each half 1,2 comprises an elongate grip portion 4, which is of a suitable size and length to be gripped comfortably in the hand of a user.

Extending between first and second ends 5,6 of each grip portion 4 is a mounting portion 7, which arches over the grip portion 4, so that a space 8 is defined between the mounting portion 7 and the grip portion 4. Overall, each half 1,2 resembles the shape of a "D", with the grip portion 4 forming the straight part of the D, and the mounting portion 7 forming the curved part of the D.

The space 8 is sufficiently deep and wide that a user may grasp the grip portion 4, with the user's palm or fingers passing through the space 8.

On its inner side, the mounting portion 7 has a channel 9 which takes the form of a groove or trough running along the length of the grip portion 7. In the embodiment shown, the channel 9 runs substantially all the way around the mounting portion 7, from the first end 5 of the grip portion 4 to the second end 6 thereof. In other embodiments, however, the channel 9 may extend over less of the length of the mounting portion 7.

Figure 2 shows a cross-sectional view through one of the halves 1 of the first handle 3, taken along the line indicated in figure 1 by A-A.

As can been seen in figure 2, the grip portion 4 is substantially solid, although this is not essential and the grip portion 4 may comprise one or more recesses or hollow regions to reduce weight and cost.

The mounting portion 7 has the channel 9 running therethrough, as discussed above. In the embodiment shown, the inner and outer side walls 10,11 of this channel 9 (i.e. the walls which lie closest to, and furthest from, the grip portion 4) are substantially flat (as seen in cross section).

Moreover, the height of the inner wall 10 is preferably the same, or substantially the same, as that of the grip portion 4. However, the height of the outer wall 11 is slightly less than that of the inner wall 10.

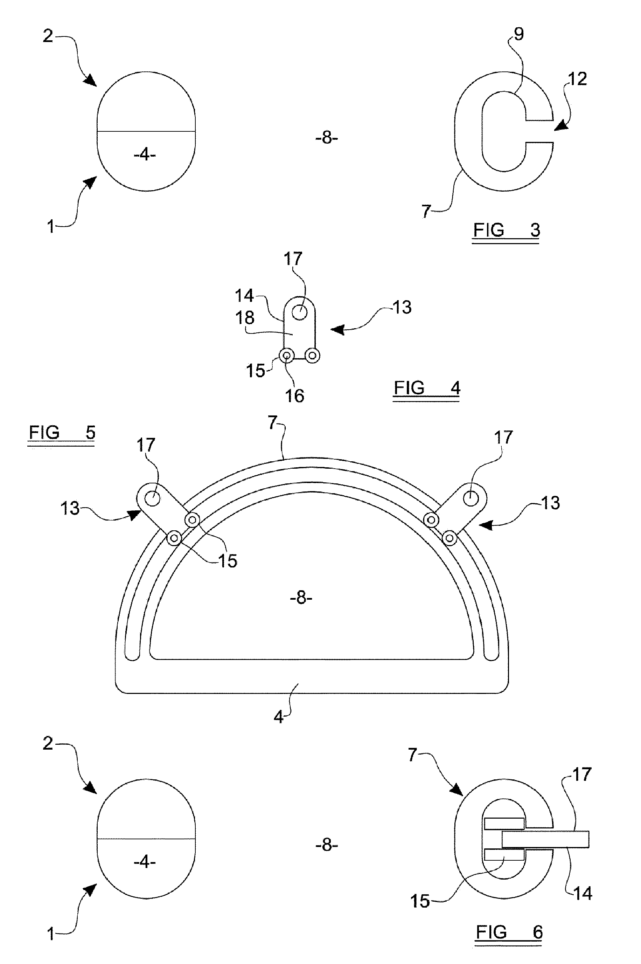

Figure 3 shows a cross-sectional view of the two halves 1,2 fixed together, and it can be seen that the fact that the outer walls 11 of the grip portions 7 of the two halves 1,2 are of reduced height leads to the presence of a gap 12 between the outer walls 11. This gap 12 therefore allows communication between the channel 9 and the exterior of the handle 3.

Figure 4 shows an attachment arrangement 13 suitable for use with the first handle 3. The attachment arrangement 13 comprises a generally planar body 14. At one end of the body 14, two pairs of rollers 15 are provided, which may rotate on axles 16 that pass through the body 14 substantially at right-angles thereto.

Two rollers 15 are provided on each side of the body 14, with each roller 15 on one side of the body 14 being connected to a corresponding roller 15 on the other side of the body 14.

As a second end of the body 14, an attachment aperture 17 is formed, passing through the depth of the body 14. In the embodiment shown the attachment aperture 17 is circular but this need not be the case and the attachment aperture 17 may take any suitable form. Indeed, any other kind of attachment site, such as a hook or carabiner-type clip, may be formed at the second end of the body 14.

A central section 18 of the body extends between the rollers 15 and the attachment aperture 17.

To assemble the handle 3, two of the attachment arrangements 13 are positioned so that the rollers 15 lie within the channel 9 of one of the halves 1 of the handle 3, with the connection aperture 17 protruding outwardly beyond the outer edge of the mounting portion 7. This is shown in figure 5. The other half 2 of the handle 3 is then placed over the first half 1 so that the halves 1,2 are aligned, and the halves 1,2 are then fixed together.

The result is shown, in cross section, in figure 6. It can be seen that the rollers 15 of each attachment arrangement 13 (of which only one is shown in figure 6) lie within the channels 9 formed by each half of the grip portion 7, and may roll against the inner surfaces of the inner or outer walls 10,11 of the grip portion 7.

The main body 14 of the attachment arrangement 13 protrudes through the gap 12 between the two outer walls 11, so that the part of the body 14 that includes the attachment aperture 17 lies outside the outer edge of the mounting portion 7. The rollers 15 of the attachment arrangement 13 are, however, too wide to fit through the gap 12, and so the attachment arrangement 13 cannot be removed from the handle 3.

The skilled person will understand that the two attachment arrangements 13 may roll within the channel 9, so that the positions at which each attachment arrangement 13 protrudes from the mounting arrangement 7 may vary.

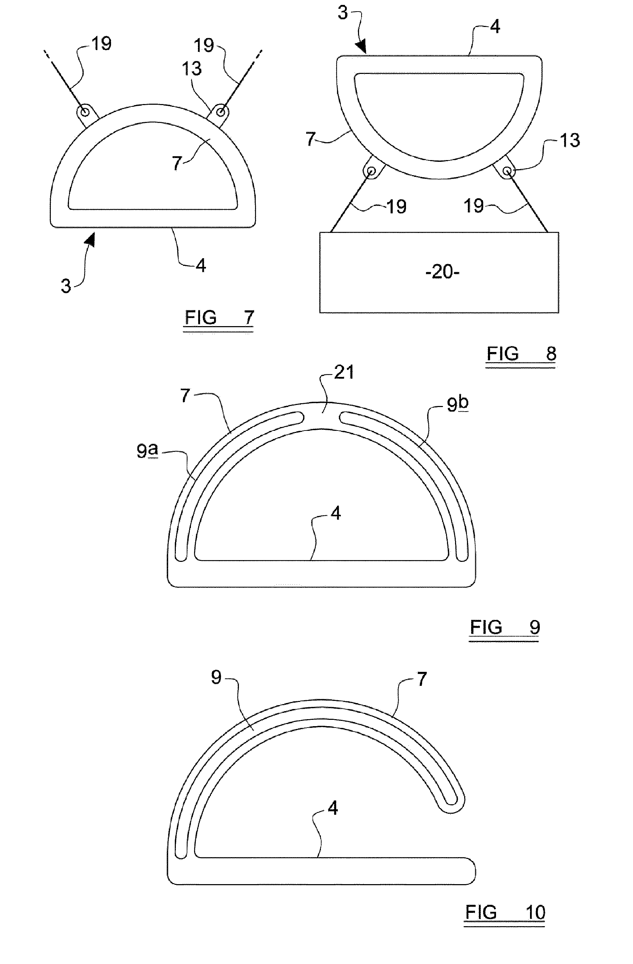

Figure 7 shows how the resulting handle 3 may be used. As one example, for use in exercising, each of the attachment arrangements 13 may be connected to a respective rope or cord 19, which is in turn connected to lift a stack of weights. The user may grasp the handle 3 and pull the handle 3, thus exerting forces on both ropes or cords 19 and lifting both stacks of weights.

As another example, as shown in figure 8, the handle 3 may be used to lift a load 20, with ropes or cords 19 extending from different parts of the load 20 and being attached to the attachment arrangements 13, thus allowing the load 20 to be lifted and carried in a convenient and stable manner.

In the embodiment shown in figures 1 to 8, a single channel 9 is formed in the grip portion 7 of the handle 3, with both of the attachment arrangements 13 being able to move along the length of the single channel 9. In an alternative embodiment, shown in figure 9, two separate and non-overlapping channels 9a,9b are formed in the grip portion 7.

The two channels 9a,9b are separated by an intermediate wall 21 which is formed at or near the peak of the grip portion 7.

In this embodiment one attachment arrangement 13 may be provided in each channel 9a,9b, so that each attachment arrangement 13 may only move within the confines of its own channel 9a,9b.

It is also envisaged that one or more channels may be formed in only one of the halves 1, 2, with the other of the halves 1, 2 not having any channels formed therein. In these embodiments the attachment arrangements 13 may be provided with rollers on only one side, and the skilled person will understand how these embodiments will operate.

In the embodiments discussed above, two attachment arrangements 13 are provided. However, it should be understood that three, four or more attachment arrangements may be provided. All of the attachment arrangements may be provided within a single channel, or a series of individual channels may be provided, with one attachment arrangement being positioned to move within each channel. As a further alternative, the handle may be provided with two channels 9a,9b, as shown in figure 9 with two or more attachment arrangements in position for movement within each of these two channels.

In the embodiments discussed above, the mounting portion is generally arcuate in shape. This need not be the case, however. In further embodiments, for example, the grip portion 7 may be generally straight, and attached to (and spaced apart from), either parallel with or angled with respect to, the grip portion 4 by suitable connecting portions.

In the embodiments above the mounting portion is attached at both ends of the grip portion 4. However, it envisaged that, in other embodiments, the mounting portion 7 may be attached at only one end of the grip portion 4, and may arch over the grip portion 4 before terminating near the other end of the grip portion 4, as shown in figure 10.

To construct any of the handles discussed above, the two halves 1,2 are attached together, for instance by being screwed or bolted together. In preferred embodiments, as shown in figure 1, a pair of main connection apertures 22 is formed through the grip portion 4 of each of the halves 1,2. When the handle 3 is assembled, these main connection apertures 22 are aligned and bolts or screws may be passed through the apertures 22. In addition, secondary connection apertures 23 may be formed at spaced intervals around the mounting arrangement 7, and any embodiments shown in figure 1 the secondary connection apertures 12 are formed on the inner side of mounting portion 7 i.e. between the space 8 and the channel 9.

Again, when the handle 3 is assembled, the secondary apertures 23 in the first and second halves 1,2 align with each other, so that bolts or screws can be passed through the secondary apertures 23.

Any other suitable method may be used for connecting the two halves 1,2, to each other, such as welding or gluing.

In the embodiments discussed above the attachment arrangements may move freely within the channel(s). However, it is envisaged that a brake mechanism may be provided to allow the attachment arrangements to be locked in a chosen position. For instance, a button may be provided on the grip portion that, when depressed or released, causes a brake element to protrude into the channel(s) and hold the attachments arrangements in place within the channel(s). The skilled person will appreciate how this may be put into effect.

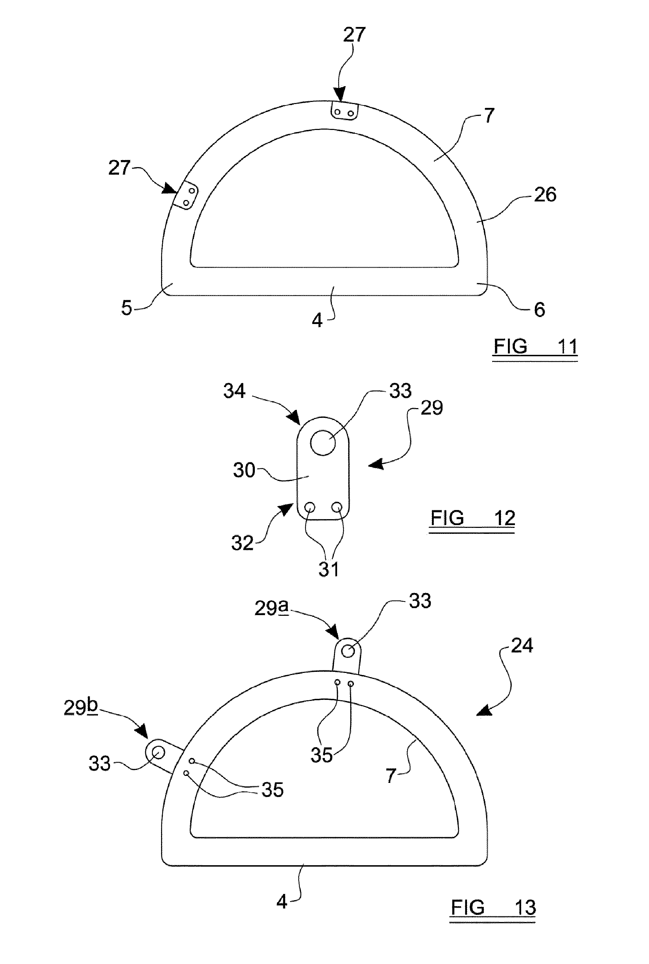

Turning to figure 11, one half 26 of a further handle 24 is shown.

In common with the embodiments discussed above, the further handle 24 has an elongated grip portion 4, and a connection portion 7 which arches over, and is spaced apart from, the grip portion 4 so that a user may grasp the grip portion in his/her hand and the fingers or palm of the user may be accommodated in the space 8 between the grip portion 4 and the mounting portion 7.

An inner side of the half 26 includes two recessed regions 27 positioned on the mounting portion 7. At each of the recessed regions 27 a recess is formed in the inner face of the half 26 (i.e. the face which will, when the further handle 24 is assembled, be positioned against the other half). In the embodiment shown, one of the recessed regions 27 is formed near the first end 5 of the grip 4, and the other recessed region 27 is located around the middle of the grip portion 7, i.e. near the midpoint between the first and second ends 5,6 of the grip portion 4.

Two securing apertures 28 are formed through each of the recessed regions 27.

Figure 12 shows an attachment arrangement 29 suitable for use with the further handle 24. The attachment arrangement 29 comprises a body 30 which, in the embodiment shown, takes the form of a generally planar sheet of a robust material such as steel. Two apertures 31 are formed through one end 32 of the attachment arrangement 29. An attachment aperture 33 is formed through the other end 34 of the body 30. In the embodiment shown the attachment aperture 33 is generally circular, but as discussed above any suitable attachment site may be formed at the other end 34 of the body 30.

To assemble the further handle 24, one attachment arrangement 29 is placed into each of the recessed regions 27 of the half 26, and another similar half (not shown) is placed over the half 26 so that the halves are aligned. The halves are then fixed to each other by any suitable means. In some embodiments, the halves are at least partly (and preferably completely) attached to one another by way of screws or bolts 35 which pass through the securing apertures 28 of the halves and also through the apertures 31 formed in the attachment arrangements 29. These screws or bolts 35 therefore hold the attachment arrangements 29 in place with respect to the further handle 24 and hold the further handle 24 together.

The assembled further handle 24 is shown in figure 13. In contrast to the embodiments described above, the two mounting arrangements 29 are fixed in place with respect to the mounting portion 7. The orientation of the grip portion 4, mounting portion 7 and attachment arrangements 29 with respect to each other is therefore fixed.

In the embodiment shown in figure 13, one of the attachment arrangements 29a protrudes from the grip portion 7 in a direction that is substantially perpendicular to the longitudinal axis of the grip portion 4. This attachment arrangement 29a is, in the embodiment shown, located around the middle of the grip portion 7, i.e. near the midpoint between the first and second ends 5,6 of the grip portion 4. The other attachment arrangement 29b protrudes in a direction which is substantially parallel with the longitudinal axis of the grip portion 4. This attachment arrangement 29b is, in the embodiment shown, located close to the first end 5 of the grip portion 4.

However, it should be understood that the invention is not limited to this, and the attachment arrangements 29 may protrude from the mounting portion 7 from any convenient positions and in any convenient directions.

As before, while two attachment arrangements 29 are shown in figure 13, three, four, or more attachment arrangements 29 may be formed as part of the further handle 24.

In some embodiments both of the halves from which the further handle 24 is formed have recessed portions 27 as discussed above to accommodate the attachment arrangements 29. However, in other embodiments only one half has a recessed portion 27 to accommodate each attachment arrangement (although all of the recessed portions 27 need not be on the same half).

The further handle 24 may be used in many different applications, for instance as illustrated in figure 7 and 8 above. It is anticipated that, since the location of the attachment arrangements 29 are fixed, the further handle 24 will be made with a particular purpose or application in mind. The lack of adaptability of the further handle 24 is compensated for by its simplicity, strength and ease of construction.

In some embodiments a series of recessed regions are provided along the length of the mounting portion 7, with two or more attachment arrangements 29 being received in some, but not all, of the recessed regions. This allows a user to detach the two halves of the further handle 24 from one another, move one or more of the attachment arrangements to a different recessed region, and re-attach the two halves together, so that the attachment arrangements are once again fixed in place with respect to the mounting portion 7. This allows some flexibility in where the attachment arrangements 29 are positioned along the length of the mounting portion 7

In all of the above embodiments the two halves are preferably formed from a robust material such as metal or a sturdy plastics material. The attachment arrangements are preferably formed from a metal such as steel, but any other suitable material may be used.

It will be appreciated that embodiments of the invention will provide robust and inexpensive handles which may be used for many different applications.

In this specification the term "half" is used to refer to a part of a handle prior to assembly. This is not intended to refer to a mathematical half, and for a given handle one half may be larger or heavier than the other. The term "half" is intended to refer to a pair of parts which may be fixed together, and these parts may be different from one another.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A handle, comprising:
an elongate grip that, in use, is grasped by a user;
a mounting portion which is fixed to the grip and extends over the grip so that the grip and mounting portion define a space therebetween in which the fingers or palm of a user may be accommodated; and
two or more attachment arrangements, each of which is attached to the mounting portion and presents an attachment site which projects outwardly from the mounting portion.

2. A handle according to claim 1, wherein the mounting portion extends from a point at or near the first end of the grip to a point at or near the second end of the grip.

3. A handle according to claim 1 or 2, wherein each attachment arrangement may move along a length of the mounting portion within a defined range of motion and preferably wherein one or more channels is defined within the mounting portion, and each of the attachment arrangements comprises an engagement portion which is received within, and may move along, the or a channel.

4. A handle according to claim 3, wherein each of the attachment arrangements may move along the length of the mounting portion within a common range of motion.

5. A handle according to claim 3, wherein each of the attachment arrangements may move along the length of the mounting portion within separate and non-overlapping ranges of motion.

6. A handle according to any one of claims 3 to 5, wherein the engagement portion comprises one or more rollers that may roll within the or a channel.

7. A handle according to claim 6, wherein a single channel is defined within the mounting portion, and each of the attachment arrangements may move within the channel or wherein a plurality of channels are defined within the mounting portion, and each of the attachment arrangements may move within a respective one of the channels.

8. A handle according to claim 1 or 2, wherein each of the attachment arrangements is fixed in place with respect to the mounting portion and preferably wherein one of the attachment arrangements protrudes from the mounting arrangement in a direction which is substantially perpendicular to the longitudinal axis of the grip portion or wherein.

9. A handle according to claim 8, wherein a part of each of the attachment arrangements is received within a respective recess in the mounting portion and preferably wherein the part of the attachment arrangement that is received within the recess is substantially the same shape as the recess.

10. A handle according to claims 8 or 9, wherein one of the attachment arrangements protrudes from the mounting arrangement in a direction which is substantially parallel with the longitudinal axis of the grip portion.

11. A handle according to any preceding claim, wherein at least one of the attachment sites comprises a closed or substantially closed loop.

12. A method of making a handle, comprising the steps of:
providing two handle halves, each handle half having an elongate grip that, in use, is grasped by a user, and a mounting portion which is fixed to the grip and extends over the grip so that the grip and mounting portion define a space therebetween in which the fingers or palm of a user may be accommodated;
forming a channel or two or more recessed portions on an inner surface of the mounting portion of at least one of the handle halves;
providing two or more attachment arrangements, each comprising a body having a first end and an attachment site at or near a second end thereof; and
fixing the two handle halves together so that the first end of each attachment arrangement is received within the channel or within one of the recessed portions, and the attachment site of each attachment arrangement protrudes outwardly from the mounting portion.

13. A method according to claim 12, wherein:
a channel is formed on an inner surface of the mounting portion of at least one of the handle halves;
each attachment arrangements comprises a body having one or more rollers at or near the first end thereof; and
the two handle halves are fixed together so that the rollers of the attachment arrangements are received within the channel, allowing the attachment arrangement to move along the length of the channel.

14. A method according to claim 13, wherein the step of forming a channel comprises forming a channel having an inner wall and an outer wall, and wherein the height of the outer wall is less than that of the inner wall, to create a gap in the outer surface of the mounting portion of the assembled handle through which the body of each attachment arrangement may pass.

15. A method according to claim 12, wherein:
two or more recessed regions are formed on the inner surfaces of the mounting portions of the handle halves; and
the two handle halves are fixed together so that the first ends of the attachment arrangements are received in respective ones of the recessed regions.
